Europäisches Patentamt

European Patent Office

Office européen des brevets

(19)

(11) Veröffentlichungsnummer : **0 318 536 B1**

# EUROPÄISCHE PATENTSCHRIFT

(12)

(45) Veröffentlichungstag der Patentschrift :
29.07.92 Patentblatt 92/31

(51) Int. Cl.$^5$ : **F24D 3/00**

(21) Anmeldenummer : **88904537.3**

(22) Anmeldetag : **31.05.88**

(86) Internationale Anmeldenummer :
**PCT/EP88/00486**

(87) Internationale Veröffentlichungsnummer :
**WO 88/09904 15.12.88 Gazette 88/27**

(54) **FERNWÄRME-ÜBERGABEVORRICHTUNG.**

(30) Priorität : **12.06.87 DE 8708283 U**
**26.04.88 DE 3814052**

(43) Veröffentlichungstag der Anmeldung :
**07.06.89 Patentblatt 89/23**

(45) Bekanntmachung des Hinweises auf die
Patenterteilung :
**29.07.92 Patentblatt 92/31**

(84) Benannte Vertragsstaaten :
**AT BE CH DE FR GB IT LI LU NL SE**

(56) Entgegenhaltungen :
**EP-A- 0 092 032**
**EP-A- 0 092 225**
**DE-A- 3 245 416**
**DE-U-85 318 256**

(73) Patentinhaber : **STEAG Fernwärme GmbH**
**Bismarckstrasse 54**
**W-4300 Essen 1 (DE)**

(72) Erfinder : **BUSSKAMP, Walter**
**Georg-Vahrenhostweg 19**
**W-4290 Bocholt (DE)**
Erfinder : **LEHMANN, Heinrich**
**Schinkelstrasse 19**
**W-4630 Bochum (DE)**
Erfinder : **LENK, Arthur**
**Kleestrasse 21**
**W-4300 Essen (DE)**
Erfinder : **LOCH, Franz-Josef**
**Julius-Leber-Strasse 47**
**W-4330 Mülheim/Ruhr (DE)**

## Beschreibung

Die Erfindung betrifft eine Vorrichtung zur Übergabe von Fernwärme an eine Heizungs- und/oder Wassererwärmungsanlage von einem mit einem Medium im Kreislauf betriebenen primären Fernwärmesystem auf ein mittels einer Umwälzpumpe zumindest teilweise im Kreislauf geführten Sekundärsystem, wenigstens einer Regelarmatur zur Mengenregelung und mit einem Wärmetauscher, wobei in der Vorrichtung mindestens zwei vertikal und parallel auf Abstand angeordnete Leitungen vorgesehen sind, die über mindestens eine Querstrebe miteinander verbunden sind und als Trägerkonstruktion für Komponenten der Übergabevorrichtung dienen.

Vorrichtungen dieser Art dienen als Übergabestation und Hauszentrale für die Raumheizung und/ oder Wassererwärmung mit Fernwärme als Primärenergieträger. Bei herkömmlichen Anordnungen wurden die Rohrleitungen sowohl untereinander als auch mit den Rohrarmaturen, Stell- und Meßgliedern im Bereich der Übergabestation und Hauszentrale überwiegend durch Flansche verbunden. Die Montage der Rohrleitungen und Funktionskomponenten der Ubergabestation erfolge häufig individuell und in Anpassung an die jeweiligen Platzverhältnisse, was einen erheblichen Montageaufwand, verbunden mit relativ hohen Anlagekosten für eine komplette Fernwärme-Übergabestation bedingte. Hohe Anschlußkosten waren bisher häufig ursächlich dafür, daß die Vorteile der Fernwärmeversorgung noch nicht ausreichend genutzt werden konnten.

Aus der EP-A-0 092 032 ist eine Vorrichtung der genannten Art bekannt, bei der die mindestens zwei vertikal und parallel auf Abstand angeordneten Leitungen über mindestens eine durchströmte Querstrebe miteinander verbunden sind. Die Trägerkonstruktion ist einstückig im Druck- oder Grauguß hergestellt und besteht aus einem Raster aus Vierkantrohren. Die an die Anschlüsse für das primäre Fernwärmesystem bzw. an die Heizungs- und/oder Wassererwärmungsanlage herangeführten Rohrleitungen übernehmen keine Tragfunktion.

Eine Trennung des mit einem Medium im Kreislauf betriebenen primären Fernwärmesystems auf ein einem anderen Medium im Kreislauf betriebenen Sekundärsystem ist nur mit zwei voneinander getrennten Tragkonstruktionen der bekannten Art möglich. Es ist daher die Aufgabe der vorliegenden Erfindung, eine Vorrichtung der gattungsgemäßen Art zu schaffen, die einen besonders einfachen Aufgau der Trägerkonstruktion aufweist, die sich sowohl für freistehende Ausführung als auch für die Wandmontage eignet, wobei mit der Vorrichtung eine mediumseitige Trennung der Heizungs- und/oder Wassererwärmungsanlage vom primären Fernwärmesystem möglich ist.

Diese Aufgabe wird dadurch gelöst, daß die beiden Systeme unter Ausbildung getrennter Kreisläufe durch einen Wärmetauscher voneinander getrennt sind und die vier als zylindrische Rohrleitung ausgebildeten Kreislaufleitungen von oben vertikal und parallel zueinander an die Vorrichtung herangeführt sind und wenigstens zwei der mit dem Fernwärmekreislauf und/ oder Sekundärkreislauf verbundenen Rohrleitungsabschnitte zusammen mit einer nicht durchströmten horizontalen Querstrebe die Trägerkonstruktion bilden und daß zur Abstützung der Trägerkonstruktion auf dem Boden des Aufstellungsortes der Übergabevorrichtung an den bodenseitigen geschlossenen Enden Fußteile vorgesehen sind, die eine Standfläche für die Vorrichtung bilden. Durch den Einsatz eines vorzugsweise als Plattenwärmetauscher ausgebildeten Wärmetauschers kann eine Trennung der beiden Systeme unter Ausbildung getrennter Kreisläufe erreicht werden. Da die stabilen, zumeist aus Stahl bestehenden Rohrleitungen zusätzlich zu ihrer Leitungsfunktion auch als Trägerelemente genutzt werden, kann mit Hilfe der mindestens einen nicht durchströmte horizontalen Querstrebe eine sehr einfache Trägerkonstruktion aufgebaut werden, an der der Wärmetauscher so wie die anderen Komponenten der Übergabevorrichtung befestigt werden können.

Diese Gestaltung der Übergabevorrichtung ermöglicht eine komplette betriebsfertige Montage einschließlich steckerfertiger Elektroverdrahtung, da beim Einbau der Übergabevorrichtung diese nur noch an die von oben vertikal und parallel zueinander an die Vorrichtung herangeführten Rohrleitungen angeschlossen werden muß. Da wenigstens zwei der mit dem Fernwärmekreislauf und/oder Sekundärkreislauf verbundenen Rohrleitungsabschnitte Bestandteil der Vorrichtung werden, verringert sich deren Platzbedarf.

Da die Vorrichtung auch für eine Aufstellung auf dem Boden des Einsatzortes ausgerüstet ist, kann die Vorrichtung wahlweise mit an sich bekannten Befestigungstechniken an einer benachbarten Wand - in freistehender Ausführung - auf einem geeigneten horizontalen Boden aufgestellt werden.

Eine mechanisch besonders stabile Ausführung der zweiten erfindungsgemäßen Lösungsvariante besteht darin, daß die Längsstützen durch die beiden am weitesten voneinander beabstandeten vertikalen Rohrleitungen, vorzugsweise durch einen Rohrabschnitt des Fernwärmevorlaufs und einen Rohrabschnitt des Sekundärkreis-Rücklaufs gebildet sind. Ein unterer Abschnitt wenigstens einer eine Längsstütze bildende Rohrleitung ist als Schlammfänger ausgebildet und mit einer Abschlämmarmatur versehen. Dabei kann ein offenes Ende eines zur Rohrleitung gehörigen Fallrohres in eine erweiterte Absetzkammer er des Schlammfängers eintauchen, wobei die Absetzkammer er einen Auslauf oberhalb der Mündungsstelle des Fallrohres aufweist.

Zur Stabilisierung der zur Trägervorrichtung gehörigen, vorzugsweise aus Stahl bestehenden Rohrleitungen hat die wenigstens eine Querstrebe vorzugsweise ein Vierkant-Kastenprofil. Sie verläuft rechtwinklig zu den Längsstützen und ist mit diesen verschweißt. Das Kastenprofil läßt sich an den zu verschweißenden Stoßflächen problemlos an die teilweise unterschiedlichen Rohrleitungsquerschnitte anpassen.

Jedes Fußteil hat in bevorzugter Ausführungsform wenigstens eine zu der Ebene der beiden Längsstützen rechtwinklig verlaufende Kufe, die mit Höhenverstellmitteln, beispielsweise in Form von Schraubfüßen, zum Ausgleich von Unebenheiten des Untergrunds oder leichten Neigungen der Längsstutzen versehen ist.

Gemäß einer Weiterbildung der Erfindung sind die Rohrleitungen und Armaturen der Fernwärme-Übergabevorrichtung durch Schraub- und /oder Schweißverbindungen zusammengeschlossen. Schraub- und Schweißverbindungen ermöglichen im Vergleich zu den herkömmlichen Flanschverbindungen eine Verkürzung der Rohrführung und damit eine gedrängtere Bauweise der Gesamtvorrichtung. Zudem haben Rohrverbindungen geringere Abstrahlflächen als Flanschverbindungen.

Vorzugsweise ist der Plattenwärmetauscher mit den angeschlossenen Rohrleitungsabschnitten und Komponenten des Fernwärmevor- und -rücklaufs durch eine haubenförmige Verkleidung wenigstens zur Frontseite hin abgedeckt. Diese Verkleidung ist an der Tragkonstruktion lösbar befestigt. Durch die bereits herstellerseitig festgelegte und optimierte Anordnung der Betriebskomponenten und der Rohrführung kann bei verkleideter Station die Wärmeabstrahlung zur Umgebung hin minimiert werden. Trotzdem bleibt die Zugänglichkeit aller Komponenten der Übergabevorrichtung gewahrt, da die haubenartige Verkleidung problemlos abzunehmen ist.

Das zentrale Steuergerät ist in der haubenförmigen Verkleidung vor den Rohrleitungsabschnitten des Fernwärmevorlaufs und -rücklaufs zur Frontseite hin sichtbar montiert. Die haubenförmige Verkleidung kann als ein- oder mehrteilige Blechverkleidung oder - in bevorzugter Ausführung - als Kunststoffhaube ausgebildet sein.

Für die Wassererwärmung kann ein Parallelzweig an den Fernwärmevor- undrücklauf angebunden werden. Das für die Wassererwärmung erforderliche weitere Wärmetauschersystem kann an einem weiteren flachen Trägermodul in Form eines zusätzlichen Trägerrahmens oder an einer durch systemeigene Rohrleitungen gebildeten Trägerkonstruktion angeordnet werden. Auf diese Weise wird die Wassererwärmungsanlage ebenso wie die Heizungsanlage an der Übergabestation zu einer kostengünstigen, einbaufertig vormontierten Baueinheit zusammengefaßt. Auch läßt sich die Übergabestation problemlos durch eine Wassererwärmungsanlage nachrüsten, die als Zusatzmodul angeschlossen und beigestellt werden kann.

In den Unteransprüchen sind zweckmäßige Weiterbildungen der Erfindung gekenneichnet. Auch Einzelmerkmale und Unterkombinationen der Ansprüche sind erfindungswesentlich.

Weitere Einzelheiten und Vorteile der Erfindung ergeben sich aus der nachfolgenden Beschreibung eines in der Zeichnung dargestellten Ausführungsbeispiels. In der Zeichnung zeigen:

Fig.1 ein Schaltbild der Fernwärme-Übergabevorrichtung mit betriebsmäßig angeschlossenen externen Komponenten;

Fig.2 eine Frontansicht eines Ausführungsbeispiels der Erfindung, wobei zwei vertikale Rohrleitungen der Ubergabestation Längsstützen einer Trägerkonstruktion für freistehende Montage bilden;

Fig.3 eine Seitenansicht des Ausführungsbeispiels gemäß Fig.2 ohne Verkleidung;

Fig.4 eine teilweise geschnittene Seitenansicht auf den unteren Abschnitt einer eine Längsstütze bildenden Rohrleitung mit Schlammfänger und höhenverstellbarem Fußteil; und

Fig.5 eine Frontansicht auf das zweite Ausführungsbeispiel in der Montagestellung mit aufgesetzter Verkleidung.

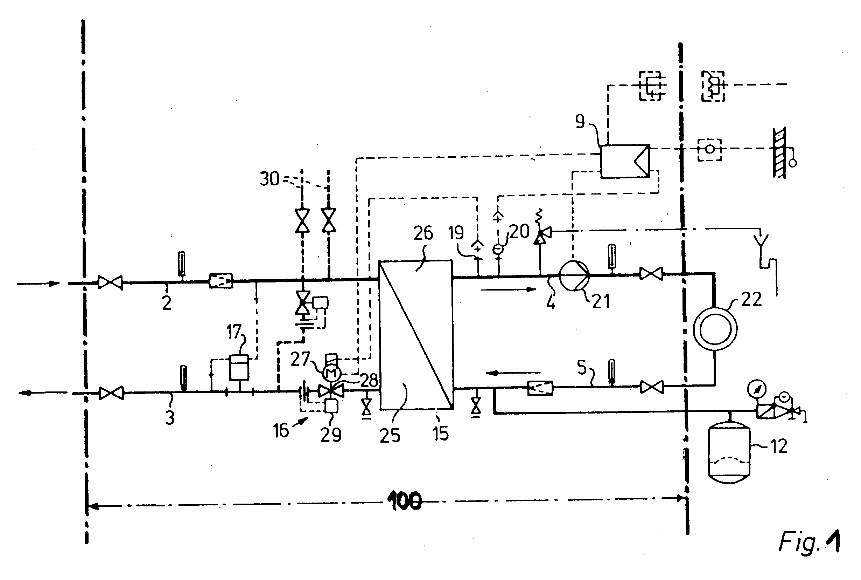

Figur 1 zeigt die bei dem folgenden Ausführungsbeispiel verwendeten Funktionselemente, wobei in einem strichpunktiert abgegrenzten Mittelbereich diejenigen Elemente der Übergabevorrichtung 100 dargestellt sind, die beim Hersteller oder in der Werkstatt einschließlich Verkleidung und steckerfertiger Verdrahtung an der flachen Trägerkonstruktion 101 vormontiert werden können. Dem Fernwärmevorlauf 2 sind die üblichen Komponenten, nämlich ein handbetätigtes Absperrventil, ein Manometer, ein Thermometer, ein Schmutzfänger und ein Temperaturfühler zugeordnet. In einem Plattenwärmetauscher 15 wird aus dem Fernwärmekreislauf 2, 3 Wärme an das im Heizungskreislauf 4, 5 zirkulierenden Heizungsmediums übertragen. Das Fernwärmemedium durchströmt den kompakten Plattenwärmetauscher im Gegenstrom zum Heizungsmedium und wird über den Fernwärmerücklauf 3 in das Fernwärmenetz zurückgeführt. Dem Fernwärmerücklauf 3 sind ein Entleerungsventil, eine als Ganze mit 16 bezeichnete Volumenstrom-Regelvorrichtung, ein Volumenzähler 17, ein Temperaturführer, ein Thermometer, ein weiteres Manometer und ein weiteres Absperrventil zugeordnet.

Der Heizungskreislauf weist im dargestellten Bereich der Hauszentrale vorlaufseitig einen Vorlauftemperaturfühler 19, einen Sicherheitstemperaturwächter 20, ein Sicherheitsventil, eine Umwälzpumpe 21, ein Thermometer und eine Absperrarmatur auf. Der Heizungskreislauf schließt sich über die Heizanlage 22 und den Heizungsrücklauf 5, dem eine weitere Absperrarmatur, ein Thermometer, ein Schmutzfänger, der Anschluß des Druckausdehnungsgefäßes 12 und ein Entleerungsventil zugeordnet sind. Die Anschlüsse am Plattenwärmetauscher 15 sind so vorgesehen, daß das Fernwärmemedium die Primärseite 25 im Gegenstrom zu dem Heizungsmedium in der Sekundärseite 26 des Plattenwärmetauschers 15 durchströmt.

Die zu dem Schaltbild gemäß Figur 1 gehörige elektrische Schaltungsanordnung ist bekannt. Der Motorantrieb 27 für das Volumenstellglied 28 der Volumenregelvorrichtung 16 wird in bekannter Weise witterungs- und temperaturabhängig durch die elektrische Regeleinrichtung geregelt. Das Zentralgerät 9 schaltet auch die Umwälzpumpe 21 im Heizungskreislauf. Koaxial zum Motorantrieb 27, jedoch auf der anderen Seite des Stellglieds 28, ist ein Volumenstrombegrenzer 29 angeordnet, der zur Begrenzung des Volumenstroms auf dasselbe Stellglied 28 wie der Motorantrieb 27 einwirkt.

In dem Schaltbild gemäß Figur 1 ist gestrichelt die Anbindung 30 einer Wassererwärmungsanlage gezeigt, die mit den zusätzlichen Schaltungskomponenten an einem eigenen Trägerrahmen neben dem Rahmen 10 angebracht und geeignet abgedeckt sein kann.

Bei der Fernwärme-Übergabevorrichtung 100 wird eine Trägerkonstruktion 101 aus wenigstens zwei vertikalen Rohrleitungen 2 und 5 mit einer verschweißten Querstrebe 102 von kastenförmigen (rechteckigem) Querschnittsprofil verwendet. Die vertikalen Rohrleitungen 2 und 5 übernehmen zusätzlich zu ihrer betrieblichen Funktion als Fernwärmevorlauf und Heizungsrücklauf eine Trägerfunktion für die Komponenten. An Übergabestationen vor allem größerer Bauart werden Stahlrohrleitungen verwendet, deren mechanische Stabilität zur Übernahme der Trägefunktionen von Längsstützen allemal ausreicht. Eine zusätzliche Verwindungssteifigkeit erhält die Trägerkonstruktion 101 noch durch die mechanische Einbindung der Fernwärmerücklauf- und Heizungsvorlauf-Rohrleitungen 3 und 4. Die Rohrleitungen 3 und 4 sind mit der aus mehreren Teilabschnitten bestehenden Querstrebe 102 verschweißt.

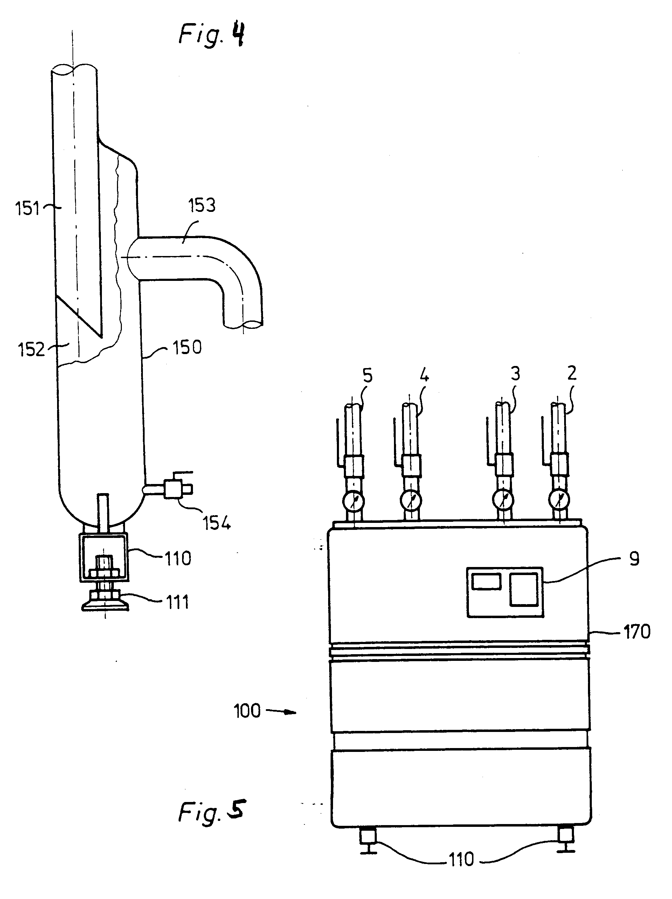

Die als Längsstütze dienenden Rohrleitungen 2 und 5 sind nach unten über das Niveau des Wärmetauscher-Anschlußstutzens 32 hinaus verlängert. Der untere Rohrabschnitt 120 ist mit einem kufenförmigen, höhenverstellbaren Fußteil 110 fest verbunden. Der untere Rohrabschnitt 120 der als Tragstütze dienenden Rohrleitung 2 kann als Schlammfänger ausgenutzt, mit einer Abschlämmarmatur verbunden und ähnlich dem weiter unten beschriebenen unteren Abschnitt 150 der ebenfalls als Tragstütze dienenden Rohrleitung 5 zur Beruhigung der Strömung erweitert ausgebildet sein. Der als Schlammfänger ausgebildete untere Abschnitt 150 der linken vertikalen Längsstütze 5 ist in Fig. 4 genauer dargestellt. Die eigentliche Rohrleitung 5 taucht als Fallrohr 151 in eine erweiterte Absetzkammer er 152 ein. In der Absetzkammer 152 sinken die aus dem Heizungsrücklauf 5 kommenden festen Schwebestoffe aufgrund der Geschwindigkeitsreduktion im Abschlämmbereich nach unten, während das flüssige Sekundärmedium (Wasser) zu dem oberhalb der Mündungsstelle des Fallrohrs 151 angeordneten Auslauf 153 umgelenkt wird. Eine geeignete Abschlämmarmatur 154 steht nahe des Bodens des Schlammfängers 150 mit der Absetzkammer 152 in Verbindung. Ein weiterer kufenartiger und höhenverstellbarer Fußteil 110 stützt das untere Ende der von der Rohrleitung 5 in Kombination mit dem erweiterten Schlammfänger 150 gebildete Längsstütze bodenseitig ab

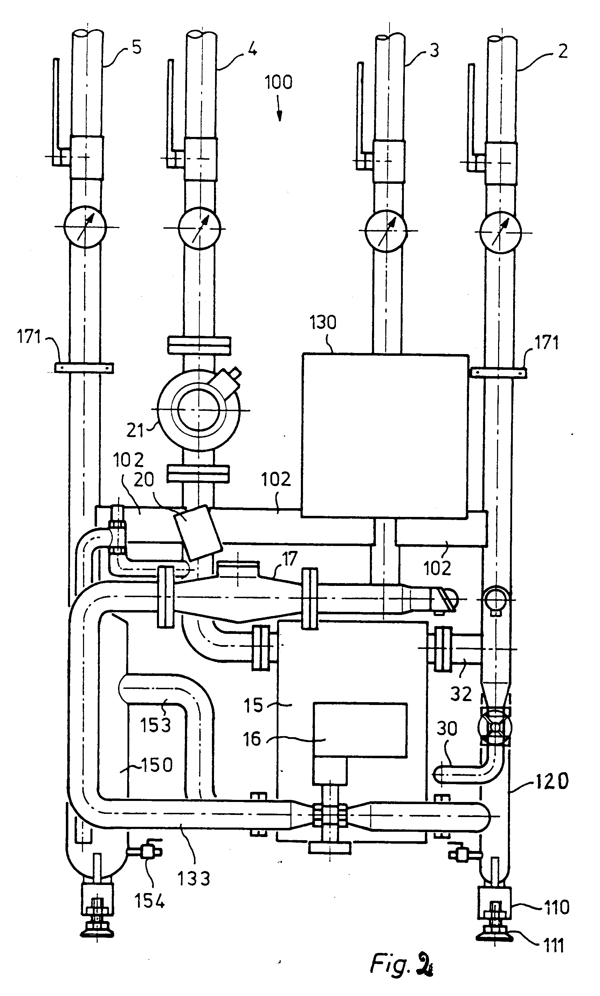

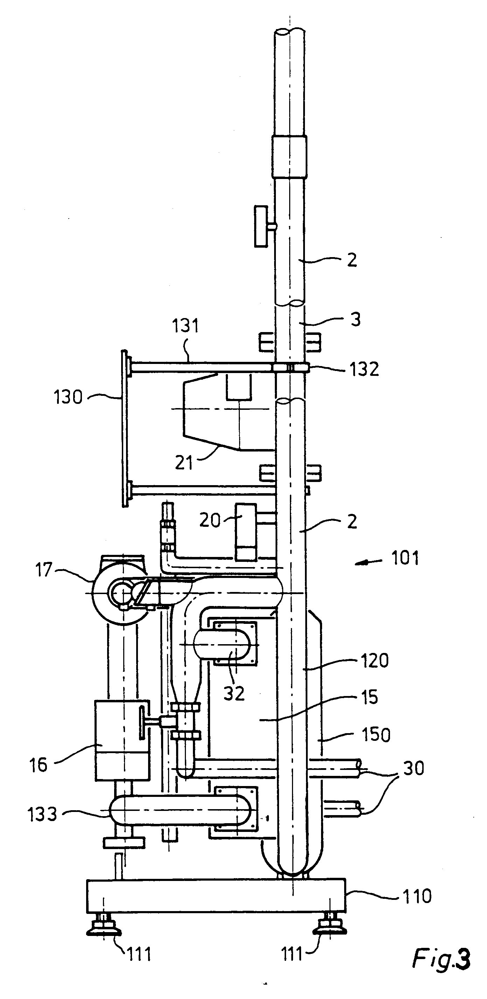

Jeder kufenartige Fußteil 110 hat an den front- und rückseitigen Enden handbetätigbare Höhenverstellmittel in Form von Schraubfüßen 111, um Bodenunebenheiten oder Neigungsfehler der Trägerkonstruktion 101 geeignet ausgleichen zu können. Über die Fußteile 110 läßt sich die in den Fig. 2 und 3 dargestellte Fernwärme-Übergabevorrichtung 100 freistehend an irgendeiner beliebigen Stelle nahe oder entfernt von einer Stützwand derart aufstellen, daß die Hausanschlüsse mit den fertig vormontierten Rohrleitungsanschlüssen der Rohrleitungen 2 bis 5 ausgefluchtet sind.

Eine Montagetafel 130, an der das Zentralgerät und das Rechenwerk der Wärmemengenzählung montiert sind, ist über Haltestreben 131 und Schellen 132 am Fernwärmerücklauf 3 montiert.

Die Übergabestation 100 ist vor allem für große Leistungen vorgesehen. Es sind Rohrleitungsstutzen 30 von Fernwärmevorlauf und -rücklauf zum Anschluß einer in der Zeichnung nicht dargestellten Wassererwärmungsanlage vorgesehen. Letztere kann zusammen mit den betrieblichen Funktionselementen als Modul der 100 gemäß Figur 2 beigestellt werden. Für das beigestellte Modul kann die funktionsnotwendige Verrohrung als Teil einer Trägerkonstruktion vorgesehen sein.

Die Fernwärme-Übergabevorrichtung 100 ist in Figur 5 in der fertigen Montagestellung gezeigt. Die Verkleidung 170 ist als einstückige Kunststoffwanne ausgebildet. Die Verkleidung 170 wirkt im Betriebszustand der Übergabevorrichtung wie ein Konvektor, ohne sich selbst übermäßig stark aufzuheizen. Die Verkleidung ermöglicht es daher, die Übergabestation nicht nur in spezielle Hausstationsräume, sondern auch in Hausarbeits- oder Hobbyräume einzubauen. Bei dem dargestellten Ausführungsbeispiel ist die Verkleidung über geeignete Schellen und Halter 171 an den die Längsstützen bildenden Rohrleitungen 2 und 5 sowie über eine Schraubverbindung 172 an der Oberseite jeder Kufe 110 lösbar mit der Trägerkonstruktion 101 verbunden.

Die Rohrverbindungen und Anschlüsse sind vorzugsweise verschweißt oder als Schraubverbindungen ausgeführt; wie jedoch Fig. 2 zeigt, sind Flanschverbindungen vor allem dort vorteilhaft, wo Einzelkomponenten, beispielsweise der Wärmetauscher 15 und/oder der frontseitige Strang 133 des Fernwärmerücklaufs zur Frontseite hin auszubauen sind. Auch brauchen die als Längsstützen dienenden Rohrleitungen, insbesondere Fernwärmevorlauf 2 und Heizungsrücklauf 5, nicht genau parallel zueinander und/oder vertikal und /oder geradlinig zu verlaufen; etwaige Relativneigungen können durch Anschluß der Fußteile 110 und /oder geeignete Einstellung der Höheverstellmittel 111 korrigiert und ausgeglichen werden. Anstelle einer einzigen Querstrebe 102 kann ein Fachwerk mit mehreren parallelen Streben vorgesehen werden. Es reicht jedoch die dargestellte eine Querstrebe 102, zumal die Einbindung aller vertikalen Rohrleitungen 2 bis 5 über den Wärmetauscher 15 auch zur Querstabilität der gesamten Trägerkonstruktion 101 beiträgt.

**Patentansprüche**

1. Vorrichtung zur Übergabe von Fernwärme an eine Heizungs- und/oder Wassererwärmungsanlage von einem mit einem Medium im Kreislauf betriebenen primären Fernwärmesystem auf ein mittels einer Umwälzpumpe zumindest teilweise im Kreislauf geführten Sekundärsystem, wenigstens einer Regelarmatur zur Mengenregelung und mit einem Wärmetauscher, wobei in der Vorrichtung mindestens zwei verbal und parallel auf Abstand angeordnete Leitungen vorgesehen sind, die über mindestens eine Querstrebe miteinander verbunden sind und als Trägerkonstruktion für Komponenten der Übergabevorrichtung dienen, **dadurch gekennzeichnet**, daß die beiden Systeme unter Ausbildung getrennter Kreisläufe (2, 3; 4, 5) durch einen Wärmetauscher (15) vonein ander getrennt sind und die vier als zylindrische Rohrleitungen ausge bildeten Kreislaufleitungen von oben verbal und parallel zueinander an die Vorrichtung herangeführt sind und wenigstens zwei der mit dem Fernwärmekreislauf und/oder Sekundärkreislauf verbundenen Rohrleitungsabschnitte zusammen mit einer nichtdurchströmten horizontalen Querstrebe die Trägerkonstruktion (101) bilden und daß zur Abstützung der Trägerkonstruktion auf dem Boden des Aufstellungsortes der Übergabevorrichtung an den bodenseitigen geschlossenen Enden Fußteile (110, 111) vorgesehen sind, die eine Standfläche für die Vorrichtung bilden.

2. Vorrichtung nach Anspruch 1, **dadurch gekennzeichnet**, daß die Längsstützen durch die beiden am weitesten voneinander beabstandeten Rohrleitungen (2,5) gebildet sind.

3. Vorrichtung nach Anspruch 1 oder 2, **dadurch gekennzeichnet**, daß ein bodennaher Abschnitt wenigstens einer als Längsstütze dienenden Rohrleitung (5) als Schlammfänger (150) ausgebildet und mit einer Abschlämmarmatur (154) versehen ist.

4. Vorrichtung nach Anspruch 3, **dadurch gekennzeichnet**, daß ein offenes Ende eines zur Rohrleitung (5) gehörigen Fallrohrs (151) in eine erweiterte Absetzkammer (152) des Schlammfängers (150) eintaucht und daß ein Auslauf (153) oberhalb des offenen Endes des Fallrohrs (151) in die Absetzkammer (152) mündet.

5. Vorrichtung nach einem der Ansprüche 1 bis 4, **dadurch gekennzeichnet**, daß die Querstrebe (102) ein Vierkant-Kastenprofil hat und wenigstens mit den die Längsstützen bildenden Rohrleitungen (2, 5), vorzugsweise auch den anderen, hierzu im wesentlichen parallel verlaufenden Rohrleitungen (3, 4) verschweißt ist.

6. Vorrichtung nach einem der Ansprüche 4 bis 5, **dadurch gekennzeichnet**, daß jedes Fußteil (110) wenigstens eine zur Montageebene der Längsstützen (2, 5) rechtwinklig verlaufende Kufe und Mittel (110') zur Höhen- und/oder Winkelverstellung aufweist.

7. Vorrichtung nach einem der Ansprüche 1 bis 6, daß der Wärmetauscher (15) mit den angeschlossenen Rohrleitungsabschnitten und Komponenten des Femwärmevor- und -rücklaufs sowie einem Teil der Komponenten des Sekundärkreislaufs durch eine haubenförmige Verkleidung (7; 170) zur Frontseite hin abgedeckt sind und daß die Verkleidung an der Trägerkonstruktion (101) lösbar befestigt ist.

8. Vorrichtung nach Anspruch 7, **dadurch gekennzeichnet,** daß ein zentrales Steuergerät (9) in der haubenförmigen Verkleidung (7; 170) vor Rohrleitungsabschnitten des Fernwärmevorlaufs und/oder -rücklaufs (2, 3) zur Frontseite hin sichtbar befestigt ist.

9. Vorrichtung nach Anspruch 7 oder 8, **dadurch gekennzeichnet**, daß die Verkleidung (170) über Schellen (171) an den die Längsstützen bildenden Rohrleitungen (2, 5) lösbar angebracht ist.

10. Vorrichtung nach einem der Ansprüche 1 bis 9, **dadurch gekennzeichnet**, daß die Femwärmevor- und -rückläufe (2, 3) mit Anbindungsanschlüssen (30) für die Warmwasserbereitung versehen sind.

11. Vorrichtung nach einem der Ansprüche 1 bis 10, **dadurch gekennzeichnet,** daß die zur Übergabevorrichtung (100) gehörigen Rohrleitungsabschnitte der primären und sekundären Vor- und Rückläufe (2, 3, 4, 5) durch schalldämmende Einlagen enthaltende Rohrschellen (40, 41) mit den Trägemahmen (10) oder der Trägerkonstruktion (101) verbunden sind.

12. Vorrichtung nach Anspruch 2, **dadurch gekennzeichnet**, daß die beiden am weitesten voneinander beabstandeten Rohrleitungen (2,5) ein Rohrabschnitt des Fernwärmevorlaufs und ein Rohrabschnitt des Sekundärkeis-Rückaufs sind.

## Claims

1. Device for the transfer of remote heat at a heating and/or water heating plant from a primary heating system operated with one medium in the circuit to a secondary system led by means of a circulating pump at least partly in the circuit, at least one regulating valve for quantity regulation and with a heat exchanger, wherein at least two ducts, which are arranged in the device vertically and parallelly at a spacing, are provided, are connected with one another by way of at least one transverse strut and serve as a carrier construction for components of the transfer device, **characterised thereby** that the two systems are separated from one another, with formation of separate circuits (2, 3; 4, 5), by a heat exchanger (15) and the four circuit ducts constructed as cylindrical pipe ducts are led from above vertically and parallelly to one another to the device and at least two of the pipe duct portions, which are connected with the remote heat circuit and/or secondary circuit, form together with a horizontal transverse strut, which is not flowed through, the carrier construction (101) and that, for the support of the carrier construction on the base of the installation location of the transfer device, foot parts (110, 111) with closed ends are provided at the side of the base and form a stand surface for the device.

2. Device according to claim 1, **characterised thereby** that the longitudinal supports are formed by the two pipe ducts (2, 5) which are spaced apart from one another the most.

3. Device according to claim 1 or 2, **characterised thereby** that a portion, which is close to the base, of at least one pipe duct (5) serving as a longitudinal support is constructed as a sludge trap and is provided with a sludge valve (154).

4. Device according to claim 3, **characterised thereby** that an open end of a down pipe (151) belonging to the pipe duct (5) dips into a further sediment chamber (152) of the sludge trap (150) and that an outlet opens above the open end of the down pipe (151) into the sediment chamber (152).

5. Device according to one of claims 1 to 4, **characterised thereby** that the transverse strut (102) has a square box profile and is welded to at least the pipe ducts (2, 5) forming the longitudinal supports, preferably also to the other pipe ducts (3, 4) extending substantially parallelly thereto.

6. Device according to one of claims 4 to 5, **characterised thereby** that each foot part (110) has at least one pad extending at right angles to the assembly plane of the longitudinal supports (2, 5) and means (110′) for adjustment of height and/or angle.

7. Device according to one of claims 1 to 6, **characterised thereby** that the heat exchanger (15) together with the connected pipe duct portions and components of the remote heat feed and return as well as a part of the components of the secondary circuit are covered by a hood-like cowling (7; 170) from the front side and that the cowling is detachably fastened to the carrier construction (101).

8. Device according to claim 7, **characterised thereby** that a central control apparatus (9) is fastened in the hood-like cowling (7; 170) in front of the pipe duct portions of the remote heat feed and/or return (2, 3) and is visible from the front side.

9. Device according to claim 7 or 8, **characterised thereby** that the cowling (170) is releasably mounted by way of clamps (171) to the pipe ducts (2, 5) forming the longitudinal supports.

10. Device according to one of claims 1 to 9, **characterised thereby** that the remote heat feed and return (2, 3) are provided with attachment connections (30) for hot water preparation.

11. Device according to one of claims 1 to 10, **characterised thereby** that the pipe duct portions, which belong to the transfer device (100), of the primary and secondary feeds and returns (2, 3, 4, 5) are connected by pipe clamps (40, 41), which contain sound insulating linings, with the carrier frame (10) or the carrier construction (101).

12. Device according to claim 2, **characterised thereby** that the two pipe ducts (2, 5) spaced the furthest apart are a pipe portion of the remote heat feed and a pipe portion of the secondary return.

## Revendications

1. Dispositif de transmission de chaleur produite à distance à une installation de chauffage et/ou de chauffe-eau à partir d'un système primaire de chaleur produite à distance amené à fonctionner en circuit avec un milieu, à un système secondaire amené à fonctionner au moins partiellement en circuit, au moyen d'une pompe de circulation, au moins une armature de régulation pour le réglage du débit et avec un échangeur de chaleur, dans le dispositif étant prévu au moins deux conduits placés à distance, verticalement et parallèlement, qui sont reliés entre eux par au moins une entretoise et qui servent de construction de support à des composants du dispositif de transfert, **caractérisé en ce que** les deux systèmes, par la formation de circuits séparés (2, 3; 4, 5) sont séparés l'un de l'autre par un échangeur de chaleur (15), et que les quatre conduits de circulation réalisés sous la forme de canalisations cylindriques sont amenées au dispositif depuis le haut, verticalement

6

et parallèlement les unes aux autres et qu'au moins deux des tronçons de canalisation reliés au circuit de chaleur produite à distance et/ou circuit secondaire forment avec une entretoise horizontale à travers laquelle il n'y a pas d'écoulement, la construction de support (101), et que pour l'appui de la construction de support sur le sol du lieu de mise en place du dispositif de transfert, des éléments de socle (110, 111) sont prévus aux extrémités fermées côté sol qui constituent une surface d'appui du dispositif.

2. Dispositif selon la revendication 1, **caractérisé en ce que** les supports longitudinaux sont constitués par les deux canalisations (2, 5) dont l'écartement est le plus grand.

3. Dispositif selon la revendication 1 ou 2, **caractérisé en ce qu'**un tronçon proche du sol d'au moins une canalisation (5) servant de support longitudinal est réalisé sous la forme d'un capteur de dépôt de boue (150) et est pourvu d'une armature de débourbeur (154).

4. Dispositif selon la revendication 3, **caractérisé en ce qu'**une extrémité ouverte d'un tube (2) descente (151) faisant partie de la canalisation (5) plonge dans une chambre de décantation élargie (152) du dispositif débourbeur (150), et en ce qu'un orifice de sortie (153) débouche au-dessus de l'extrémité ouverte du tube de descente (151) dans la chambre de décantation.

5. Dispositif selon l'une des revendications 1 à 4, **caractérisé en ce que** l'entretoise (102) possède un profil d'une caisse à quatre parois et est reliée par soudage au moins aux canalisations (2, 5) formant les supports longitudinaux, de préférence également aux autres canalisations (3, 4) s'étendant de façon sensiblement parallèles à celle-ci.

6. Dispositif selon l'une des revendications 4 à 5, **caractérisé en ce que** chaque élément de socle (110) présente au moins un patin s'étendant perpendiculairement au plan de montage des supports longitudinaux (2, 5) ainsi que des moyens (110') pour le déplacement en hauteur et/ou angulaire.

7. Dispositif selon l'une des revendications 1 à 6, **caractérisé en ce que** l'échangeur de chaleur (15) avec les tronçons de canalisation raccordés et les composants du flux et reflux de chaleur produite à distance ainsi qu'avec une partie des composants du circuit secondaire et recouvert vers le côté de devant par un revêtement en forme de chape (7; 170) et en ce que la chape est fixée de manière amovible sur la construction de support (101).

8. Dispositif selon la revendication 7, **caractérisé en ce qu'**un appareil de commande central (9) est monté dans le revêtement en forme de chape (7; 170) devant des tronçons de canalisation du flux et/ou reflux de chaleur produite à distance (2, 3) de façon visible vers le côté avant.

9. Dispositif selon la revendication 7 ou 8, **caractérisé en ce que** le revêtement (170) est monté de façon amovible par l'intermédiaire de brides (171) sur les canalisations (2, 5) constituant les supports longitudinaux.

10. Dispositif selon l'une des revendications 1 à 9, **caractérisé en ce que** les flux et reflux de chaleur produite à distance (2, 3) sont pourvus de deux raccordements (30) pour la préparation d'eau chaude.

11. Dispositif selon l'une des revendications 1 à 10, **caractérisé en ce que** les tronçons de canalisation faisant partie du dispositif de transfert (100) des flux et reflux primaires et secondaires (2, 3, 4, 5) sont reliés par des brides tubulaires (40, 41) contenant des inserts d'amortissement du son au châssis de support (10) ou la construction de support (101).

12. Dispositif selon la revendication 2, **caractérisé en ce que** les deux canalisations 2, 5 dont l'espacement l'une par rapport à l'autre est le plus grand constituent un tronçon de tube du flux de chaleur produite à distance et un tronçon de tube du reflux du circuit secondaire.

Fig. 1

EP 0 318 536 B1

Fig. 2

Fig.3

Fig. 4

151

153

152

150

154

110

111

5  4  3  2

9

170

100 →

110

Fig. 5